# EUROPEAN PATENT SPECIFICATION

(11) **EP 2 813 801 B1**
(45) Date of publication and mention of the grant of the patent: **31.10.2018**
(21) Application number: 13171266.3
(22) Date of filing: 10.06.2013
(51) Int. Cl.: G01B 9/02, G02B 27/10, G02B 27/28, G02F 1/01

(54) **Interferometer system and method to generate an interference signal of a surface of a sample**
Interferometersystem und Verfahren zur Erzeugung eines Interferenzsignals einer Oberfläche einer Probe
Système d'interféromètre et procédé pour générer un signal d'interférence d'une surface d'un échantillon

(43) Date of publication of application: 17.12.2014
(73) Proprietor: Mitutoyo Corporation, Kawasaki-shi, Kanagawa 213-8533 (JP)
(72) Inventor: Haitjema, Han, 5624 KP EINDHOVEN (NL); Quaedackers, Johannes Anna, 5508 LR VELDHOVEN (NL); Zuiderweg, Adriaan Tiemen, 4814 HM BREDA, (NL)
(74) Representative: EP&C

(56) References cited:
- EP-A1- 2 246 659
- WO-A1-00/17706
- WO-A1-2005/098353
- WO-A1-2008/139799
- WO-A2-2007/140356
- US-A1- 2003 174 339
- US-A1- 2003 227 667
- US-A1- 2010 039 692
- US-B1- 6 208 798
- DUNSBY C ET AL: "High-speed wide-field coherence-gated imaging via photorefractive holography with photorefractive multiple quantum well devices; High-speed photorefractive holography with PRQW devices", JOURNAL OF OPTICS. A, PURE AND APPLIED OPTICS, INSTITUTE OF PHYSICS PUBLISHING, BRISTOL, GB, vol. 5, no. 6, 27 October 2003 (2003-10-27), pages S448-S456, XP020080573, ISSN: 1464-4258, DOI: 10.1088/1464-4258/5/6/009
- Michael North Morris ET AL: "Noise reduction in dynamic interferometry measurements", Proc. SPIE 7790, Interferometry XV: Techniques and Analysis, 2 August 2010 (2010-08-02), XP055080210, DOI: doi:10.1117/12.860450 Retrieved from the Internet: URL:http://dx.doi.org/10.1117/12.860450 [retrieved on 2013-09-20]
- L.A.L. DE ALMEIDA ET AL: "A hysteresis model for a VO2 variable optical attenuator", PROCEEDINGS OF THE 20TH IEEE INSTRUMENTATION TECHNOLOGY CONFERENCE (CAT. NO.03CH37412), vol. 2, 2003, pages 1285-1287, XP055093641, DOI: 10.1109/IMTC.2003.1207958 ISBN: 978-0-78-037705-9
- LOKHORST A C ET AL: "Thermochromic metal-hydride bilayer devices", JOURNAL OF ALLOYS AND COMPOUNDS, ELSEVIER SEQUOIA, LAUSANNE, CH, vol. 404-406, 8 December 2005 (2005-12-08) , pages 465-468, XP025330240, ISSN: 0925-8388, DOI: 10.1016/J.JALLCOM.2005.01.128 [retrieved on 2005-12-08]
- SOLTANI M ET AL: "Thermochromic vanadium dioxide smart coatings grown on Kapton substrates by reactive pulsed laser deposition", JOURNAL OF VACUUM SCIENCE AND TECHNOLOGY: PART A, AVS /AIP, MELVILLE, NY., US, vol. 24, no. 3, 4 May 2006 (2006-05-04), pages 612-617, XP012090964, ISSN: 0734-2101, DOI: 10.1116/1.2186661
- Newport: "Variablel Beam Splitters (CA-CB)", Product Specification Newport, 4 November 2012 (2012-11-04), pages 1-2, XP55330990, Retrieved from the Internet: URL:https://www.newport.com/medias/sys_mas ter/images/images/hc1/h49/8797301473310/VA -CB-Ultrafast-Attentuator.pdf [retrieved on 2016-12-21]

## Description

The invention relates to an interferometer system to generate an interference signal of a surface of a sample comprising:
a broadband illuminator to provide a broadband illumination beam;
a beam splitter to split the broadband illumination beam in a reference beam for reflection on a reference reflector and a measurement beam for reflection on the surface of the sample; and,
a detector to receive an interference radiation intensity created between the reference beam reflected from the reference reflector and the reflected measurement beam from the surface of the sample to generate an interference signal.

The interferometer system may be, for example, a Mirau, Michelson and/or Linnik interferometer apparatus. The system may be used to generate a correlogram displaying interference radiation intensity as a function of the scanning distance from the surface. Such apparatus may be used for determining a property (e.g. height, film thickness, refractive index) of a surface of a sample with a broadband (white light) illumination beam.

US6538809 discloses a variable illumination interference module for selective attachment to a microscope objective. The module having a reference mirror and a beam splitter, said beam splitter being positioned on an optical axis between said reference mirror and an object. A carrier means for supporting a plurality of beam splitters and for selectively positioning one of said plurality of beam splitters on said optical axis may be provided. Each of said plurality of beam splitters may have a different reflection/transmission ratio, whereby objects having different reflective values may be examined. The carrier means may be a turret supporting at least four beam splitters with respective reflection/transmission ratios of 20/80, 35/65, 43/57 and 50/50.

A problem may be that the carrier means supporting a plurality of beam splitters may be rather complex and require precise alignment of the beam splitters if the beam splitter are selectively positioned on the optical axis. The reflection/ transmission ratio's of the plurality of beam splitters are fixed such that it is difficult to make small adjustments of the reflection transmission ratio.

On the other hand, document WO 2008/139799 discloses a low-coherence interferometer (OCT), which uses a half-wave plate and a polarizing beam-splitter in order to adjust the power ratio between reference and sample beam. The objective is scanned along the optical axis to access different depths.

The document "Thermochromic metal-hydrate bilayer devices", A.C. Lokhorst et al; Journal of Alloys and Components 404 - 406 (2005), describes a temperature dependent reflector.

It is an objective to provide an improved interferometer system to generate an interference signal of a surface of a sample.

Accordingly, in an embodiment, there is provided an interferometer system to generate an interference signal of a surface of a sample comprising:
a broadband illuminator to provide a broadband illumination beam;
a beam splitter to split the broadband illumination beam in a reference beam for reflection on a reference reflector and a measurement beam for reflection on the surface of the sample; and
a detector to receive an interference radiation intensity created between the reference beam reflected from the reference reflector and the reflected measurement beam from the surface of the sample to generate an interference signal; wherein,
   the interferometer system further comprises a continuous variable broadband reflector in the beam splitter to adjust the broadband radiation intensity balance between the measurement beam and the reference beam,
wherein the interferometer system further comprises:
   a scanner constructed and arranged to scan the surface of the sample with respect to the measurement beam in a direction substantially perpendicular to the surface over a scanning distance (through the focal plane) while measuring the scanning distance generating a scanning distance signal, and
   a processor configured to receive the interference signal representing the interference radiation intensity during the scan from the detector and the scanning distance signal from the scanner and combining both to a correlogram displaying an interference radiation intensity as a function of the scanning distance, and
wherein the continuous variable broadband reflector comprises a temperature dependent reflector which reflectivity is dependent on the temperature, and a temperature adjuster configured to adjust the temperature of the temperature dependent reflector to adjust the reflectivity of the temperature dependent reflector.

By scanning the surface through the focal plane of the interferometer system a correlogram can be produced which may be used to determine a surface property of the sample.

By simply adjusting the temperature the reflectivity may be adjusted. The continuous variable broadband reflector is continuously variable such that the balance between the measurement beam and the reference beam may be precisely and continuously adjusted. The adjustment is not dependent of a particular beam splitter among a plurality of beam splitters in a turret.

The continuous variable broadband reflector is provided in the beam splitter. The advantage of providing the continuous variable broadband reflector on the beam splitter is that no illumination radiation is lost.

The continuous variable broadband reflector may be used to adjust the intensity balance between the measurement beam and the reference beam to such an extent that the interference radiation intensity received on the detector is optimized. For example, by the measurement beam and the reference beam having at the detector a substantially equal intensity.

According to an embodiment there is also provided a method to generate an interference signal of a surface of a sample with an interferometer system, the method comprising:
providing a broadband illumination beam;
splitting the illumination beam in a reference beam for reflection on a reference reflector and a measurement beam for reflection on the surface of the sample with a beam splitter;
receiving an interference radiation intensity created between the reference beam reflected from the reference reflector and the reflected measurement beam from the surface of the sample on a detector creating an interference signal; wherein
   the method comprises adjusting the broadband radiation intensity balance between the measurement beam and the reference beam with a continuous variable broadband reflector in the beam splitter,
wherein the method further comprises:
   scanning the surface with respect to the measurement beam in a direction substantially perpendicular to the surface over a distance while creating a distance signal with a scanner; and
   receiving the interference signal representing the interference radiation intensity received on the detector from the detector and the distance signal from the scanner with a processor and combining both to a correlogram displaying an interference radiation intensity as a function of the distance from the surface to measure a surface property of the sample,
wherein the continuous variable broadband reflector comprises a temperature dependent reflector of which a reflectivity is dependent on the temperature, and
wherein the method further comprises adjusting the temperature of the temperature dependent reflector to adjust the reflectivity of the temperature dependent reflector.

Embodiments of the invention will now be described, by way of example only, with reference to the accompanying schematic drawings in which corresponding reference symbols indicate corresponding parts, and in which:
Figures 1a and 1b depict Mirau interferometer system according to an embodiment;
Figure 2 discloses a Michelson interferometer system according to an embodiment;
Figure 3 discloses a a Linnik interferometer system according to an embodiment; and
Figure 4 discloses a continuous variable broadband reflector comprising a temperature dependent reflector according to an embodiment.

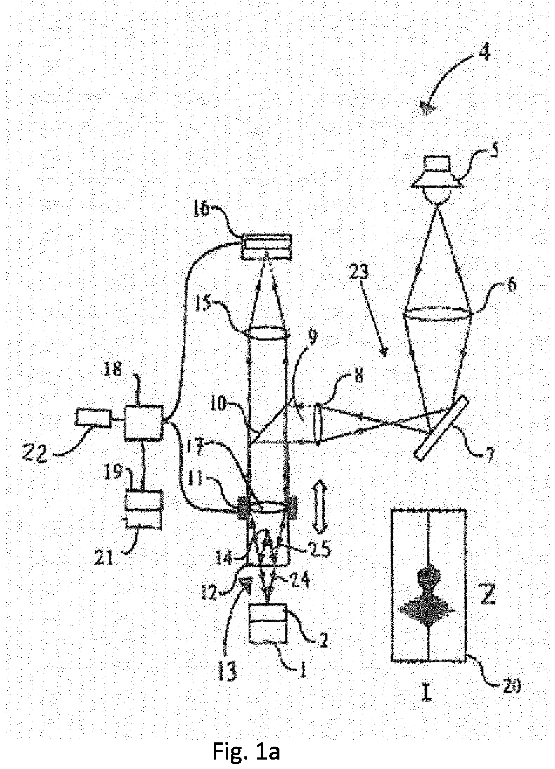

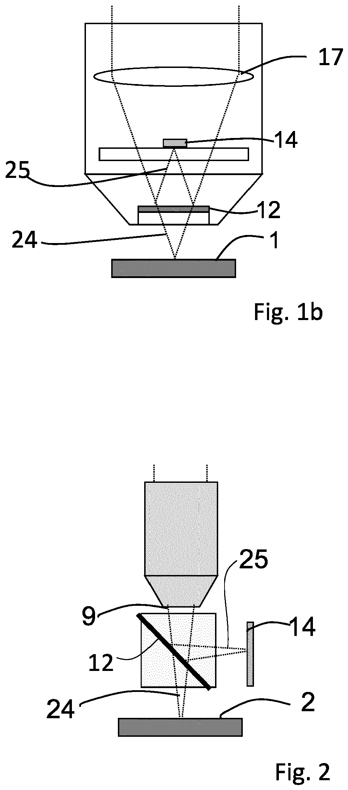

Figures 1a and 1b depict interferometer systems to measure a surface property of a sample 1 according to an embodiment. The measurement system comprises an interferometer apparatus, for example a Mirau interferometer apparatus 4, a Michelson and/or Linnik interferometer apparatus may also be used.

The apparatus 4 may comprise a broadband illuminator 23 to provide a broadband illumination beam 9. The broadband illuminator may comprise a broadband radiation source 5, a first lens 6, a first mirror 7 and a second lens 8, to provide the broadband illumination beam 9. The broadband illumination beam may be parallel. The broadband illumination beam 9 may be reflected on a illumination beam splitter 10 and traverse through an objective lens 17 before it reaches a beam splitter 12 for splitting the broadband illumination beam in a reference beam 25 and a measurement beam 24.

The reference beam may be reflected on a reference reflector 14. The measurement beam may reflect from a surface of the sample 1 comprising thin film 2. The beam reflected from the reference reflector 14 may reflect again on the beam splitter 12. The beam reflected from the sample 1 and the thin film 2 may traverse through the beam splitter 12. The reference beam and the measurement beam may interfere and traverse through the objective lens 17, the illumination beam splitter 10 and a lens 15 to the detector 16. The intensity of the interference beam may be measured with the detector 16.

The reference reflector 14, the objective lens 17 and the beam splitter 12 may together form a Mirau objective and may be scanned optically with respect to the sample 1 along the optical axis and through the focal plane of the objective lens 17 with a scanner 11.

The interferometer system may comprises a continuous variable broadband reflector in the beam splitter 12 to adjust the broadband radiation intensity balance between the measurement beam 24 and the reference beam 25. The interferometer system may comprise a balance adjuster 22 operably connected to the beam splitter to adjust the reflectivity of the continuous variable broadband reflector to adjust the broadband radiation intensity balance between the measurement beam 24 and the reference beam 25 to optimize the interference radiation intensity on the detector 16. An advantage of having the continuous variable broadband reflector in the beam splitter 12 to adjust the broadband radiation intensity balance is that no illumination radiation is lost by adjusting the beam splitter. If less radiation is going to the reference beam more light will be going to the measurement beam and the other way around. The total amount of radiation traversing through the beam splitter will be equal only the balance will be different. The intensity balance is optimized such that the measurement beam and the reference beam at the detector have a substantially equal intensity.

The signal of each of the pixels of the optical sensor 16 may be read out to obtain a correlogram as depicted in box 20 in figure 1, which depicts a received intensity I as function of the Z-position Z of the sample 2. The apparatus may therefore be provided with a primary processor 18 for receiving for each pixel a signal representing the interference radiation intensity received on the detector 16 and a distance signal from the scanner 11 and combine both to a received correlogram 20 for each pixel displaying an interference radiation intensity as a function of the scanning distance from the sample. A property of the sample 2 may be determined from the cross correlogram made by cross correlator 19 with a secondary processor 21 of the correlogram 20.

The balance adjuster 22 may be connected to the detector and may be programmed to adjust the broadband radiation intensity balance between the measurement beam 24 and the reference beam 25 on the basis of the interference radiation intensity received on the detector 16.

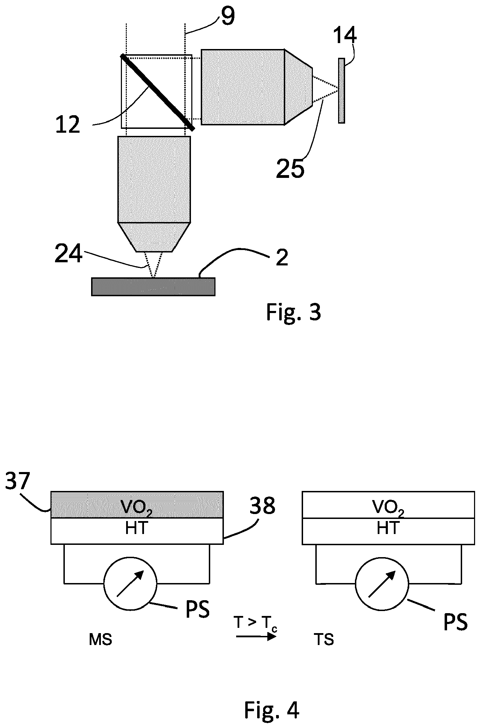

The interferometer apparatus may be for example a Mirau interferometer (Figure 1), a Michelson interferometer (Figure 2) or a Linnik interferometer apparatus (Figure 3). In each of these interferometer systems the continuous variable broadband reflector in the beam splitter 12 may be used to adjust the broadband radiation intensity balance between the measurement beam 24 and the reference beam 25 thereby adjusting any imbalance in the intensity of the measurement beam 24 and the reference beam 25 caused by absorption on the sample 1.

Figure 4 discloses a continuous variable broadband reflector comprising a temperature dependent reflector 37 comprising vanadium dioxide (VO₂). The reflectivity is dependent on the temperature; and, a temperature adjuster 38 is provided to adjust the temperature of the temperature dependent reflector to adjust the reflectivity of the temperature dependent reflector. If the temperature of the reflector is larger than a critical temperature Tc the reflectivity is changed from a reflective state MS to a transmissive state TS. The temperature adjuster may be a resistor connected with a power source PS to heat the temperature dependent reflector or a Peltier element for heating and cooling.

It is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Furthermore, the terms and phrases used herein are not intended to be limiting, but rather, to provide an understandable description of the invention.

The terms "a" or "an", as used herein, are defined as one or more than one. The term another, as used herein, is defined as at least a second or more. The terms including and/or having, as used herein, are defined as comprising (i.e., not excluding other elements or steps). Any reference signs in the claims should not be construed as limiting the scope of the claims or the invention. The mere fact that certain measures are recited in mutually different dependent claims does not indicate that a combination of these measures cannot be used to advantage. The scope of the invention is only limited by the following claims.

## Claims

1. An interferometer system to generate an interference signal of a surface of a sample comprising:
a broadband illuminator (23) to provide a broadband illumination beam (9);
a beam splitter (12) to split the broadband illumination beam (9) in a reference beam (25) for reflection on a reference reflector (14) and a measurement beam (24) for reflection on the surface of the sample (1); and
a detector (16) to receive an interference radiation intensity created between the reference beam (25) reflected from the reference reflector (14) and the reflected measurement beam from the surface of the sample (1) to generate an interference signal;
wherein the interferometer system further comprises:
a continuous variable broadband reflector in the beam splitter (12) to adjust the broadband radiation intensity balance between the measurement beam and the reference beam,
a scanner (11) constructed and arranged to scan the surface of the sample with respect to the measurement beam (24) in a direction substantially perpendicular to the surface over a scanning distance while measuring the scanning distance generating a scanning distance signal; and
a processor configured to receive the interference signal representing the interference radiation intensity during the scan from the detector (16) and the scanning distance signal from the scanner (11) and combining both to a correlogram displaying an interference radiation intensity as a function of the scanning distance,
wherein the continuous variable broadband reflector comprises:
a temperature dependent reflector (37) of which a reflectivity is dependent on the temperature; and
a temperature adjuster (38) to adjust the temperature of the temperature dependent reflector (37) to adjust the reflectivity of the temperature dependent reflector (37).

2. The interferometer system according to claim 1, wherein the temperature dependent reflector (37) comprises vanadium dioxide, VO₂.

3. The interferometer system according to claim 2, wherein the temperature adjuster (38) is further configured to, if the temperature of the temperature dependent reflector (37) is larger than a critical temperature (Tc), change the reflectivity from a reflective state (MS) to a transmissive state (TS).

4. The interferometer system according to claim 1, 2 or 3, wherein the temperature adjuster (38) is a resistor connected to a power source (PS) to heat the temperature dependent reflector (37).

5. The interferometer system according to claim 1, 2 or 3, wherein the temperature adjuster (38) is a Peltier element for heating or cooling.

6. A method to generate an interference signal of a surface of a sample (1) with an interferometer system, the method comprising:
providing a broadband illumination beam (9);
splitting the illumination beam (9) in a reference beam (25) for reflection on a reference reflector (14) and a measurement beam (24) for reflection on the surface of the sample (1) with a beam splitter (12); and
receiving an interference radiation intensity created between the reference beam (25) reflected from the reference reflector (14) and the reflected measurement beam from the surface of the sample (1) on a detector creating an interference signal,
wherein the method further comprises adjusting the broadband radiation intensity balance between the measurement beam (24) and the reference beam (25) with a continuous variable broadband reflector in the beam splitter (12),
**characterized in that** the method further comprises:
scanning the surface with respect to the measurement beam (24) in a direction substantially perpendicular to the surface over a distance while creating a distance signal with a scanner (11); and
receiving the interference signal representing the interference radiation intensity received on the detector from the detector and the distance signal from the scanner (11) with a processor and combining both to a correlogram displaying an interference radiation intensity as a function of the distance from the surface to measure a surface property of the sample,
wherein the continuous variable broadband reflector comprises a temperature dependent reflector (37) of which a reflectivity is dependent on the temperature, and
wherein the method further comprises adjusting the temperature of the temperature dependent reflector to adjust the reflectivity of the temperature dependent reflector.

7. The method according to claim 6, wherein the temperature dependent reflector (37) comprises vanadium dioxide, VO₂.

8. The method according to claim 7, wherein, if the temperature of the temperature dependent reflector (37) is larger than a critical temperature (Tc), the reflectivity is changed from a reflective state (MS) to a transmissive state (TS).

9. The method according to claim 6, 7 or 8, wherein the temperature is adjusted by a resistor connected to a power source (PS) to heat the temperature dependent reflector (37).

10. The method according to claim 6, 7 or 8, wherein the temperature is adjusted by a Peltier element for heating or cooling.

## Patentansprüche

1. Interferometersystem zum Erzeugen von einem Interferenzsignal von einer Oberfläche einer Probe, umfassend:
eine Breitbandbeleuchtungsvorrichtung (23), um einen Breitbandbeleuchtungsstrahl (9) bereitzustellen;
einen Strahlteiler (12), um den Breitbandbeleuchtungsstrahl (9) in einen Referenzstrahl (25) zur Reflexion an einem Referenzreflektor (14) und einen Messstrahl (24) zur Reflexion auf der Oberfläche der Probe (1) zu teilen; und
einen Detektor (16), um eine Interferenzstrahlungsintensität zu empfangen, die zwischen dem Referenzstrahl (25), der von dem Referenzreflektor (14) reflektiert wird, und dem von der Oberfläche der Probe (1) reflektierten Messstrahl hervorgerufen wird, um ein Interferenzsignal zu erzeugen;
wobei das Interferometersystem ferner das Folgende umfasst:
einen kontinuierlich variablen Breitbandreflektor in dem Strahlteiler (12), um den Breitbandstrahlungsintensitätsausgleich zwischen dem Messstrahl und dem Referenzstrahl einzustellen,
einen Scanner (11), der konstruiert und angeordnet ist, um die Oberfläche der Probe in Bezug auf den Messstrahl (24) in einer Richtung, die im Wesentlichen rechtwinklig zur Oberfläche verläuft, über einen Scanabstand zu messen, während der Scanabstand gemessen wird, wodurch ein Scanabstandssignal erzeugt wird; und
einen Prozessor, der konfiguriert ist, um das Interferenzsignal, das die Interferenzstrahlungsintensität während des Scans repräsentiert, von dem Detektor (16) und das Scanabstandssignal von dem Scanner (11) zu empfangen und beide zu einem Korrelogramm zu vereinen, das eine Interferenzstrahlungsintensität als eine Funktion des Scanabstands zeigt,
wobei der kontinuierlich variable Breitbandreflektor das Folgende umfasst:
einen temperaturabhängigen Reflektor (37), dessen Reflektivität von der Temperatur abhängt; und
eine Temperatureinstellvorrichtung (38), die konfiguriert ist, um die Temperatur von dem temperaturabhängigen Reflektor (37) einzustellen, um die Reflektivität von dem temperaturabhängigen Reflektor (37) einzustellen.

2. Interferometersystem nach Anspruch 1, wobei der temperaturabhängige Reflektor (37) Vanadiumoxid, VO₂, umfasst.

3. Interferometersystem nach Anspruch 2, wobei die Temperatureinstellvorrichtung (38) konfiguriert ist, um die Reflektivität von einem Reflexionszustand (MS) zu einem Transmissionszustand (CS) zu ändern, wenn die Temperatur von dem temperaturabhängigen Reflektor (37) größer als eine kritische Temperatur (Tc) ist.

4. Interferometersystem nach Anspruch 1, 2 oder 3, wobei die Temperatureinstellvorrichtung (38) ein Widerstand ist, der mit einer Energiequelle (PS) verbunden ist, um den temperaturabhängigen Reflektor (37) zu erwärmen.

5. Interferometersystem nach Anspruch 1, 2 oder 3, wobei die Temperatureinstellvorrichtung (38) ein Peltier-Element zum Erwärmen oder zum Kühlen ist.

6. Verfahren zum Erzeugen von einem Interferenzsignal von einer Oberfläche von einer Probe (1) mit einem Interferometersystem, wobei das Verfahren das Folgende umfasst:
Bereitstellen von einem Breitbandbeleuchtungsstrahl (9);
Teilen von dem Breitbandbeleuchtungsstrahl (9) in einen Referenzstrahl (25) zur Reflexion an einem Referenzreflektor (14) und einen Messstrahl (24) zur Reflexion auf der Oberfläche der Probe (1) mit einem Strahlteiler (12); und
Empfangen von einer Interferenzstrahlungsintensität, die zwischen dem Referenzstrahl (25), der von dem Referenzreflektor (14) reflektiert wird, und dem von der Oberfläche der Probe (1) reflektierten Messstrahl hervorgerufen wird, an einem Detektor, der ein Interferenzsignal erzeugt;
wobei das Verfahren ferner das Einstellen von der Breitbandstrahlungsintensitätsausgleich zwischen dem Messstrahl (24) und dem Referenzstrahl (25) mit einem kontinuierlich variablen Breitbandreflektor in dem Strahlteiler (12) umfasst,
**dadurch gekennzeichnet, dass** das Verfahren ferner das Folgende umfasst:
Scannen von der Oberfläche in Bezug auf den Messstrahl (24) in einer Richtung, die im Wesentlichen rechtwinklig zur Oberfläche verläuft, über einen Abstand, während mit einem Scanner (11) ein Abstandssignal erzeugt wird; und
Empfangen von dem Interferenzsignal, das die Interferenzstrahlungsintensität, die an dem Detektor empfangen wird, repräsentiert, von dem Detektor und von dem Abstandssignal von dem Scanner (11) mit einem Prozessor und Vereinen von beiden zu einem Korrelogramm, das eine Interferenzstrahlungsintensität als eine Funktion des Abstands von der Oberfläche zeigt, um eine Oberflächeneigenschaft von der Probe zu messen.
wobei der kontinuierlich variable Breitbandreflektor einen temperaturabhängigen Reflektor (37) umfasst, dessen Reflektivität von der Temperatur abhängt, und
wobei das Verfahren ferner das Einstellen von der Temperatur von dem temperaturabhängigen Reflektor umfasst, um die Reflektivität von dem temperaturabhängigen Reflektor einzustellen.

7. Verfahren nach Anspruch 6, wobei der temperaturabhängige Reflektor (37) Vanadiumoxid, VO₂, umfasst.

8. Verfahren nach Anspruch 7, wobei die Reflektivität von einem Reflexionszustand (MS) zu einem Transmissionszustand (CS) geändert wird, wenn die Temperatur von dem temperaturabhängigen Reflektor (37) größer als eine kritische Temperatur (Tc) ist.

9. Verfahren nach Anspruch 6, 7 oder 8, wobei die Temperatur durch einen Widerstand eingestellt wird, der mit einer Energiequelle (PS) verbunden ist, um den temperaturabhängigen Reflektor (37) zu erwärmen.

10. Verfahren nach Anspruch 6, 7 oder 8, wobei die Temperatur durch ein Peltier-Element zum Erwärmen oder zum Kühlen eingestellt wird.

## Revendications

1. Système d'interféromètre pour générer un signal d'interférence d'une surface d'un échantillon comprenant:
un illuminateur (23) à large bande pour fournir un faisceau (9) d'illumination à large bande;
un diviseur (12) de faisceau pour diviser le faisceau (9) d'illumination à large bande dans un faisceau (25) de référence pour une réflexion sur un réflecteur (14) de référence et un faisceau (24) de mesure pour une réflexion sur la surface de l'échantillon (1); et
un détecteur (16) pour recevoir une intensité de rayonnement interférentiel créée entre le faisceau (25) de référence réfléchi par le réflecteur (14) de référence et le faisceau de mesure réfléchi par la surface de l'échantillon (1) pour générer un signal d'interférence;
dans lequel le système d'interféromètre comprend en outre :
un réflecteur à large bande variable continu dans le diviseur (12) de faisceau pour ajuster l'équilibre d'intensité de rayonnement à large bande entre le faisceau de mesure et le faisceau de référence,
un scanner (11) construit et agencé pour balayer la surface de l'échantillon par rapport au faisceau (24) de mesure dans une direction sensiblement perpendiculaire à la surface et sur une distance de balayage tout en mesurant la distance de balayage générant un signal de distance de balayage; et
un processeur configuré pour recevoir le signal d'interférence représentant l'intensité de rayonnement interférentiel pendant le balayage en provenance du détecteur (16) et le signal de distance de balayage en provenance du scanner (11) et pour combiner les deux dans un corrélogramme affichant une intensité de rayonnement interférentiel en fonction de la distance de balayage,
dans lequel le réflecteur à large bande variable continu comprend:
un réflecteur (37) dépendant de la température dont la réflectivité dépend de la température; et
un ajusteur (38) de température configuré pour ajuster la température du réflecteur (37) dépendant de la température pour ajuster la réflectivité du réflecteur (37) dépendant de la température.

2. Le système d'interféromètre selon la revendication 1, dans lequel le réflecteur (37) dépendant de la température comprend du dioxyde de vanadium, VO₂.

3. Le système d'interféromètre selon la revendication 2, dans lequel l'ajusteur (38) de température est en outre configuré pour, si la température du réflecteur (37) dépendant de la température est plus grande qu'une température critique (Tc), changer la réflectivité d'un état réflecteur (MS) à un état transmetteur (TS).

4. Le système d'interféromètre selon la revendication 1, 2 ou 3, dans lequel l'ajusteur (38) de température est une résistance connectée à une source de puissance (PS) pour chauffer le réflecteur (37) dépendant de la température.

5. Le système d'interféromètre selon la revendication 1, 2 ou 3, dans lequel l'ajusteur (38) de température est un élément Peltier pour chauffage ou refroidissement.

6. Procédé pour générer un signal d'interférence d'une surface d'un échantillon (1) avec un système d'interféromètre, le procédé comprenant les étapes de:
fournir un faisceau (9) d'illumination à large bande;
diviser le faisceau (9) d'illumination dans un faisceau (25) de référence pour une réflexion sur un réflecteur (14) de référence et un faisceau (24) de mesure pour une réflexion sur la surface de l'échantillon (1) avec un diviseur (12) de faisceau; et
recevoir une intensité de rayonnement interférentiel créée entre le faisceau (25) de référence réfléchi par le réflecteur (14) de référence et le faisceau de mesure réfléchi par la surface de l'échantillon (1) sur un détecteur générant un signal d'interférence;
dans lequel le procédé comprend en outre l'étape d'ajuster l'équilibre d'intensité de rayonnement à large bande entre le faisceau (24) de mesure et le faisceau (25) de référence avec un réflecteur à large bande variable continu dans le diviseur (12) de faisceau,
**caractérisé en ce que** le procédé comprend en outre :
balayer la surface par rapport au faisceau (24) de mesure dans une direction sensiblement perpendiculaire à la surface sur une distance tout en générant un signal de distance avec un scanner (11) ; et
recevoir le signal d'interférence représentant l'intensité de rayonnement interférentiel reçu sur le détecteur en provenance du détecteur et le signal de distance en provenance du scanner (11) avec un processeur, et combiner les deux dans un corrélogramme affichant une intensité de rayonnement interférentiel en fonction de la distance de la surface pour mesurer une propriété de surface de l'échantillon,
dans lequel le réflecteur à large bande variable continu comprend un réflecteur (37) dépendant de la température dont la réflectivité dépend de la température, et
dans lequel le procédé comprend en outre l'étape d'ajuster la température du réflecteur dépendant de la température pour ajuster la réflectivité du réflecteur dépendant de la température.

7. Le procédé selon la revendication 6, dans lequel le réflecteur (37) dépendant de la température comprend du dioxyde de vanadium, VO₂.

8. Le procédé selon la revendication 7, dans lequel, si la température du réflecteur (37) dépendant de la température est plus grande qu'une température critique (Tc), la réflectivité est changée d'un état réflecteur (MS) à un état transmetteur (TS).

9. Le procédé selon les revendication 6, 7 ou 8, dans lequel la température est ajustée par une résistance connectée à une source de puissance (PS) pour chauffer le réflecteur (37) dépendant de la température.

10. Le procédé selon les revendications 6, 7 ou 8, dans lequel la température est ajustée par un élément Pelletier pour chauffage ou refroidissement.
